# EUROPEAN PATENT APPLICATION

(11) **EP 3 569 403 A1**
(43) Date of publication of application: **20.11.2019**
(21) Application number: 18709057.6
(22) Date of filing: 10.01.2018
(51) Int. Cl.: B32B 5/02, B32B 5/12, B32B 27/12, B32B 27/18, B32B 27/24, B32B 27/30, B32B 9/00, B32B 9/04, H01G 2/00

(54) **MULTIFUNCTIONAL COMPOSITE MATERIAL**

(30) Priority: 10.01.2017 ES 201730017
(71) Applicant: Fundación Imdea Materiales, 28938 Getafe - Madrid (ES)
(72) Inventor: VILATELA, Juan José, E-28938 Getafe (Madrid) (ES); SENOKOS, Evgeny, E-28938 Getafe (Madrid) (ES); MARCILLA, Rebeca, E-28935 Móstoles (Madrid) (ES); PALMA DEL VAL, Jesús, E-28935 Móstoles (Madrid) (ES)
(74) Representative: ABG Intellectual Property Law, S.L.
(86) International application number: PCT/ES2018/070015
(87) International publication number: WO 2018/130735

(57) **Abstract**

The invention relates to a sandwich-type laminar composite material, to the preparation method for preparing said composite material, to a supercapacitor and battery comprising same and to the use thereof as a structural component in the automotive field, aeronautics field, electrical field, electronic field, microelectronic field, robotics field, tools, energy generating systems, construction, textile/footwear industry or home appliances.

## Description

### Field of the Art

The present invention is comprised in the field of composite materials, more specifically laminated composite materials, as well as the method for obtaining them, and the use thereof as a structural component and as an energy storage device.

### Background of the Invention

Laminated composite materials have a widespread use in engineering applications combining high mechanical efficiency with a light weight. They usually consist of multiple stacked layers, where each of the layers itself is a composite material usually formed by high-performance fibers in a polymer matrix. These layers are referred to as "sheets" and the stack thereof is referred to as "laminate." Each of the sheets has highly anisotropic properties due to the preferential orientation of the fibers in the direction of the plane, particularly when the tensile or compression properties in and out of the plane are compared. As a result, the mechanical failure of these structures often takes place as a result of the separation of adjacent sheets when subjected to mechanical stress, a phenomenon known as "delamination." This phenomenon takes place, for example, when the laminate is subjected to an impact perpendicular to the main axis of the sheet. Such impacts are to be expected in engineering applications as structural components of aircraft, automobiles, wind turbines, etc. The laminated structure must therefore be designed to withstand such impacts, such that the total weight of the structural component does not increase.

Existing solutions include the addition of thermoplastic particles to a thermosetting matrix that incorporates the fibers in each sheet, which has the effect of increasing toughness of the sheet and its interface. This strategy has the drawback of requiring the addition of a thermoplastic to the thermosetting polymer, which complicates the different steps for manufacturing the sheet. One alternative is to add thin sheets of material between each sheet. These thin sheets typically consist of a polymer and are referred to as "interleaves", which improve the interlaminar properties by means of their high toughness and strong adhesion to the sheets between which they are interleaved (US 20110294387 A1). Despite the benefits of using interleaves to improve the interlaminar properties of laminated materials, such interleaves increase the weight of the end material compared to the interleaf-free equivalent. As a result there are a number of efforts made to minimize this parasitic weight, improving the properties of the interleaved material.

On the other hand, due to the growing interest in integrating functionalities relating to energy management in structural composite materials, extensive work has been carried out in the development of multifunctional composite materials consisting of incorporating an energy functionality (Javaid et al., J. Comp. Mater., 2014, 48, 1409-1416; Shirshova et al., J. Mater. Chem A 2013, 1, 15300-15309; Westover et al., Nano Letters, 2014, 14, 3197). This trend is particularly relevant in the field of transport, where the material properties, component weight and efficient fuel consumption go hand in hand.

Structural composite materials with functionalities as high-performance carbon fiber-based supercapacitors (US 8576542 B2, US 7855017 B1), for example, have been described along these lines. These high-performance carbon fibers constituting the sheets of the composite material furthermore act as electrodes for energy storage. Sheets based on these high-performance carbon fibers modified with carbon aerogels (Quian et al., Appl. Mater. Interfaces 2013, 5, 6113-6122; Qian et al., J. Colloid Interface Sci. 2012, 395, 241-248), coated with carbon nanotubes (Meng et al., Nanoscale 2012, 4, 7464), or with carbon nanotubes grown directly on the surface of the fibers (Li et al., Science 2004, 304, 276-278) for the purpose of increasing the specific surface area thereof, have been described. However, all the described structures tend to experience delamination in addition to being rigid and complex, as well as having manufacturing processes involving a number of steps, the use of multiple organic solvents and occasionally high-temperature treatments, which gives rise to the carbon fiber properties being eroded away.

Therefore, despite the enormous effort made in developing structural composite materials, there is still a need to develop new composite materials that entail a good balance between mechanical properties (high mechanical breaking strength and resistance to delamination) while at the same time having energy functionalities.

### Brief Description of the Invention

The authors of the present invention have developed a laminar composite material simultaneously having excellent structural properties and high energy storage efficiency. Said composite material is based on a polymer electrolyte arranged between carbon nanotube fiber sheets as interleaves, which in turn are interleaved between outer sheets having mechanical strength properties, forming together a laminated composite structure.

The internal structure formed by the polymer electrolyte arranged between carbon nanotube fiber sheets provides high energy storage capacity to the material, while at the same time allows improving adhesion between sheets and material toughness, as well as resistance to delamination. Said internal structure therefore allows replacing the webs or thin interleaves between structural sheets used in the state of the art, while also incorporating an additional functionality in the composite material.

To that end, a first object of the present invention relates to a sandwich-type laminar composite material (1) comprising:
- at least two outer sheets (2) and (2'), each of which comprises an outer surface (2a) and (2a'), respectively, and an inner surface (2b) and (2b'), respectively, wherein each of said sheets (2) and (2') comprises a polymer matrix and, optionally, reinforcing fibers;

- at least two inner sheets (3) and (3') arranged adjacent to the inner surfaces (2b) and (2b'), respectively, of the sheets (2) and (2'), wherein each of the sheets (3) and (3') comprises carbon nanotube fibers; and
- a polymer electrolyte (4) arranged between the at least two inner sheets (3) and (3').

In a particular embodiment, each of the at least two sheets (2) and (2') comprises a polymer matrix and reinforcing fibers.

In another particular embodiment, the surface of at least one of the sheets (3) and (3') is coated with a material capable of storing electrical energy by means of a reversible chemical reduction-oxidation process.

The composite material of the present invention is prepared by means of a simple preparation method that can be integrated in continuous processes for the preparation of sheets such as roll-to-roll processing, for example.

Accordingly, a second object of the present invention relates to the preparation method for preparing the composite material as defined above, wherein said method comprises the steps of:
a) assembling the polymer electrolyte (4) between the at least two inner sheets (3) and (3') comprising carbon nanotube fibers;
b) interleaving the structure resulting from step a) between the at least two outer sheets (2) and (2') comprising a polymer matrix and, optionally, reinforcing fibers, to give rise to a sandwich-type structure; and
c) applying pressure on the structure resulting from step b) .

In a particular embodiment, the method of the invention further comprises a step in which at least one of the sheets (3) and (3') is coated with a material capable of storing electrical energy by means of a reversible chemical reduction-oxidation process.

Unlike other laminar composite materials with energy storage properties, the composite material of the present invention is characterized in that it is simultaneously highly efficient as a supercapacitor, or as a battery when at least one of the sheets (3) and (3') is coated, and furthermore highly resistant to delamination after being subjected to mechanical stress due to its high toughness.

Accordingly, another object of the present invention relates to an electrochemical energy storage device comprising the composite material as defined above.

In a particular embodiment, the electrochemical energy storage device is a supercapacitor. More particularly, in the composite material of the present invention, the sheets (3) and (3') are not coated with a material capable of storing electrical energy by means of a reversible chemical reduction-oxidation process.

In another particular embodiment, the electrochemical energy storage device is a battery. In this embodiment, at least one of the sheets (3) and (3') of the laminar composite material (1) is coated with a material capable of storing electrical energy by means of a reversible chemical reduction-oxidation process.

In another particular embodiment, the electrochemical energy storage device is adhered to a surface. In this embodiment, at least one of the outer sheets (2) and (2') of the laminar composite comprises a polymer matrix without reinforcing fibers.

Finally, the present invention furthermore relates to the use of the composite material as defined above as a structural component in the automotive and aeronautics fields.

### Description of the Drawings

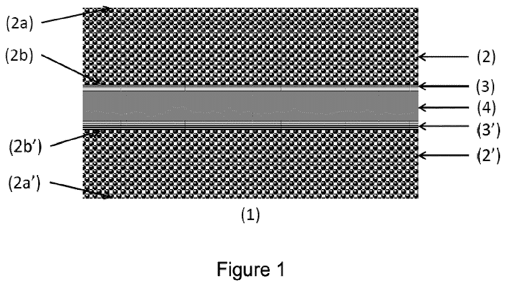

Figure 1 shows a representative diagram of the composite material of the invention.

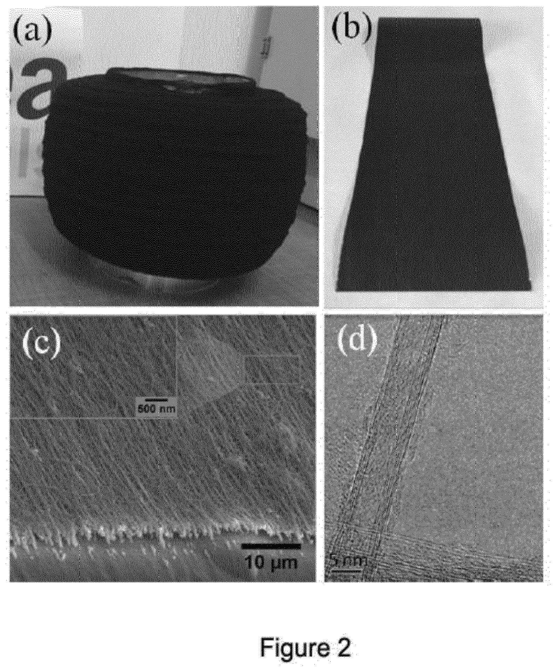

Figure 2(a) shows a photograph of a reel holding 1 km of continuous carbon nanotube fiber; Figure 2(b) shows a photograph of a sheet made up of carbon nanotube fibers; Figure 2(c) shows an electron micrograph which shows the microstructure of the carbon nanotube fiber sheet; and Figure 2(d) shows a transmission electron microscopy image which shows the carbon nanotubes used having few layers and a high degree of graphitization.

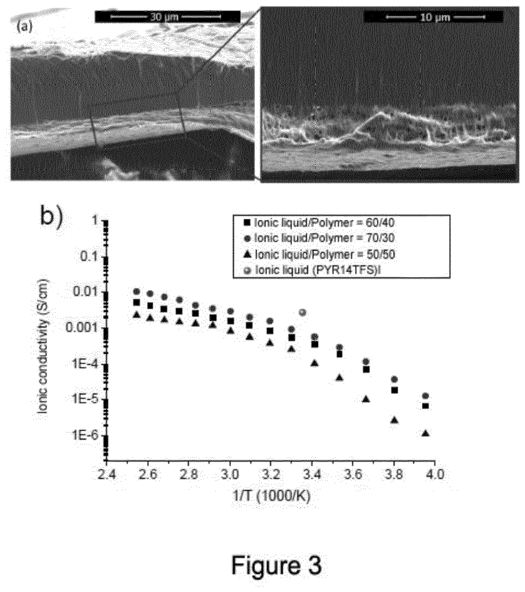

Figure 3(a) shows electron micrographs of a sandwich-type structure made up of carbon nanotube fiber sheets/polyelectrolyte membrane/carbon nanotube fiber sheets, where the ionic liquid makes up 60% by weight of the polyelectrolyte membrane with respect to the total weight of the membrane); and Figure 3(b) shows an Arrhenius plot of ionic conductivity vs. temperature for polyelectrolyte membranes with a different % by weight of ionic liquid with respect to the total weight (50, 60 and 70% by weight), as well as the plot for the pure ionic liquid (PYR₁₄TFSI) at 25°C.

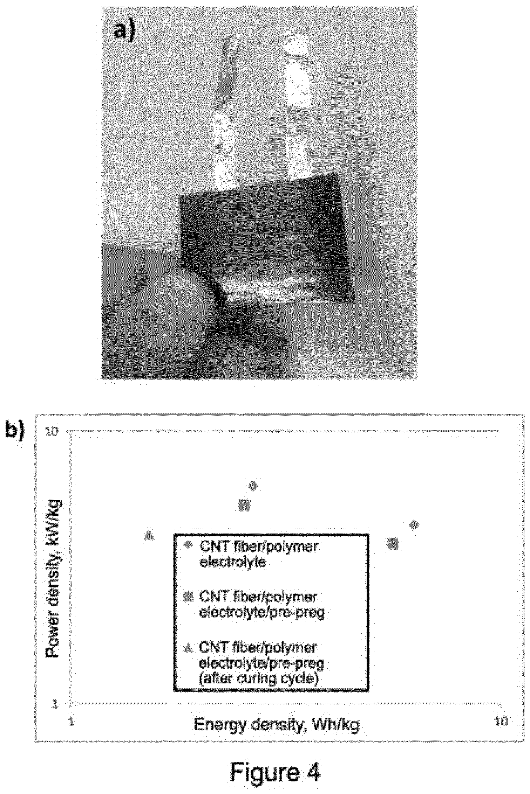

Figure 4(a) shows a photograph of a structural supercapacitor made up of epoxy resin- sheet impregnated with carbon fibers/carbon nanotube fiber sheet/polyelectrolyte membrane/carbon nanotube fiber sheet/epoxy resin sheet impregnated with carbon fibers; and Figure 4(b) shows a Ragone plot which shows the electrochemical properties of materials during the different steps of the manufacturing process.

### Detailed Description of the Invention

The present invention relates to a sandwich-type laminar composite material comprising at least two outer sheets, wherein each of said sheets comprises a polymer matrix and, optionally, reinforcing fibers; at least two inner sheets wherein each of said sheets comprises carbon nanotube fibers; and a polymer electrolyte arranged between the at least two inner sheets.

In the state of the art, the term "composite material" is widely defined as the combination of at least two types of materials to achieve the combination of properties that cannot be obtained in the original materials. Included among composite materials are structural composite materials, the properties of which fundamentally depend on the geometry and design thereof. Among such materials, the most abundant are "laminar" composite materials, formed by sheets attached to one another by some type of adhesive or other attachment. The composite material of the present invention is comprised within "sandwich-type" laminar composite materials, as such materials comprise at least two outer sheets with high mechanical strength, between which a less dense material of lower strength is placed.

Figure 1 shows a representative diagram of the sandwich-type laminar composite material (1) of the present invention. Said composite material (1) comprises at least two outer sheets (2) and (2'), each of which in turn comprises an outer surface (2a) and (2a') and an inner surface (2b) and (2b'), respectively. The material constituting each of said outer sheets comprises a polymer matrix in which reinforcing fibers are optionally embedded.

Preferably, the material constituting each of the outer sheets (2) and (2') comprises a polymer matrix in which reinforcing fibers are embedded.

The composite material further comprises at least two inner sheets (3) and (3') arranged adjacent to the inner surfaces (2b) and (2b') of the outer sheets (2) and (2), respectively. Said inner sheets comprise carbon nanotube fibers.

In a particular embodiment, the surface of at least one of the sheets (3) and (3') is coated with a material capable of storing electrical energy by means of a reversible chemical reduction-oxidation process.

This chemical process can be the result, for example, of a conversion or intercalation reaction.

A polymer electrolyte (4) is located between the inner sheets (3) and (3').

The composite material of the present invention may comprise more than one sheet (2), said sheets being arranged one on top of another forming a stack of sheets(2) located at one of the ends of the composite material.

The composite material of the present invention may thereby comprise more than one sheet (2'), said sheets being arranged one on top of another forming a stack of sheets (2') located at the opposite end of the composite material.

The material of the invention may likewise comprise more than one sheet (3), said sheets being arranged one on top of another forming a stack of sheets (3) located adjacent to the inner surface (2b) of the outer sheet (2).

The material of the invention may likewise comprise more than one sheet (3'), said sheets being arranged one on top of another forming a stack of sheets (3') located adjacent to the inner surface (2b') of the outer sheet (2').

As indicated above, the composite material of the present invention comprises at least two outer sheets (2) and (2'), wherein each of said sheets comprises a polymer matrix. Non-limiting examples of polymer matrices suitable for the composite material of the present invention include thermoplastic matrices (such as polyethylene, polypropylene, polyetheretherketone or polyvinylidene fluoride matrices, for example), thermosetting matrices (such as phenolic, epoxy, amino urea formaldehyde, polyurethane, polyester, vinyl ester, polyamide, silicone, nitrile, RTM6 or Hexcel 8852 matrices, for example) and elastomeric matrices (such as natural rubber, polyisoprene, polychloroprene, polybutadiene, styrene-butadiene rubber, acrylonitrile-butadiene rubber, polychloroprene, neoprene, polyester, polysulfite, polyurethane and silicone matrices, for example).

In a preferred embodiment, the polymer matrix is a thermosetting matrix, more preferably an epoxy, polyester or vinyl ester matrix. Other preferred matrices are structural thermoplastics such as polyetheretherketone (PEEK), polyetherketoneketone (PEKK), polyphenylene sulfide (PPS) or polyetherimide.

In a particular embodiment, the polymer matrix of the at least two outer sheets (2) and (2') of the composite material of the present invention further comprises reinforcing fibers. The term "reinforcing fiber" must be understood as a fiber of an organic or inorganic material that is capable of providing an improvement in the mechanical properties of the polymer matrix.

Non-limiting examples of reinforcing fibers suitable for the composite material of the present invention include carbon fibers, glass fibers, aramide fibers, polymer fibers (such as phenylene benzobisoxazole, polyethylene or polypropylene fibers, for example), textile fibers (such as natural cotton or wool fibers or cellulose fibers, for example) and ceramic fibers.

In a particular embodiment, the reinforcing fibers are selected from carbon fibers, cellulose fibers, polymer fibers and glass fibers, preferably reinforcing fibers with carbon fibers.

In a preferred embodiment, each of the at least two outer sheets (2) and (2') of the composite material of the present invention has a thickness between 1 and 100 mm, more preferably between 5 and 30 mm.

The composite material of the present invention further comprises, as mentioned above, at least two inner sheets (3) and (3'), wherein each of said sheets comprises carbon nanotube fibers.

In the context of the present invention, the term "carbon nanotube" refers to a structure considered to have originated from a sheet of rolled up graphite. Depending on the degree of rolling, and the way in which the original sheet is formed, the result may lead to nanotubes having a different inner geometry and diameter. Those carbon nanotubes that are formed as if the ends of a sheet of paper were attached to one another at their ends, forming the aforementioned tube, are referred to as "monolayer nanotubes" or "single-walled nanotubes". Those carbon nanotubes the structure of which resembles the structure of a series of concentric tubes, with some tubes being included inside others, like Russian nesting dolls, evidently having increasing diameters from the center out, are referred to as "multilayer nanotubes".

In a preferred embodiment, the carbon nanotubes used in the present invention are monolayer or multilayer carbon nanotubes, more preferably multilayer carbon nanotubes, still more preferably carbon nanotubes having between 2 and 5 layers.

The carbon nanotubes used in the present invention are furthermore nanotubes with a high aspect ratio, preferably greater than 100, which are highly graphitic and preferably aligned parallel to the axis of the fiber.

In the context of the present invention, the term "carbon nanotube fibers" refers to a set of carbon nanotubes as defined above, agglomerated as filaments or as a planar film or sheet or unidirectional non-woven fabric.

In a preferred embodiment, each of the at least two inner sheets (3) and (3') comprising carbon nanotube fibers of the composite material of the present invention has a thickness between 1 and 100 µm, more preferably a thickness of 5 µm.

In a particular embodiment, the surface of at least one of the two inner sheets (3) and (3') comprising carbon nanotube fibers of the composite material of the present invention is furthermore coated with a material capable of storing electrical energy by means of a reversible chemical reduction-oxidation process. The coating of at least one of the two inner sheets (3) and (3') can be both on the surface in contact with the electrolyte (4) and on the surface in contact with the at least two outer sheets (2) and (2') or on both simultaneously.

Preferably, both sheets (3) and (3') are coated on the surface in contact with the electrolyte (4) or on the surface in contact with the at least two outer sheets (2) and (2') or on both surfaces simultaneously.

Non-limiting examples of coatings suitable for the at least two inner sheets (3) and (3') comprising carbon nanotube fibers of the composite material of the present invention include cathodic or anodic materials commonly used for batteries, such as metal oxides such as, for example, Bi₂O₃, MnO₂, Mn₃O₄, RuO₂, Fe₂O₃, Fe₃O₄, TiO₂, SnO, SnO₂, SiO, SiO₂, V₂O₅, VO₂, MoO_{3,} Nb₂O₅, ZnO, CdO, In₂O₃, CoO, CO₃O₄, FeCo₂O₄, LiMn₂O₄, LiMnO₂, LiCoO₂ (LCO), Li₄Ti₅O₁₂ (LTO), LiCoMn₂O₄, LiNiₓCo_{y}Mn_{z}O₂ (where 0<x,y,z<1, x+y+z=1), LiCo₁₋ₓMₓO₂ (where 0<x<1), LiMn₂₋ₓMₓO₄ (where 0<x<2), LiNiₓCo_{y}M_{z}O₂ (where M=Mg, Al, etc. and where 0<x,y,z<1, x+y+z=1), LiV₂O₅, LiV₃O₈, LiNiₓCO_{y}O₂ (where 0<x,y<1, x+y=1), Li (Ni_{0.5}Mn_{1.5})O₄ (LNMO), LiVPO₄F, NiCoMnO₄ and combinations thereof; perovskites with chemical formula ABO₃, where 'A' and 'B' are two metal cations having different sizes, and O is an oxygen anion that binds to both; mixed oxides such as for example LaMnO₃, LaNiO₃, SrRuO₃ and combinations thereof; transition metal phosphates such as for example LiFePO₄, LiMnPO4, NiPO, Co₃ (PO₄)₂ and combinations thereof; metal nitrides such as for example VN, MoN, TiN and combinations thereof; metal oxysalts such as carbonates, oxalates, oxyhydroxides and oxyfluorides; metals such as for example lithium, magnesium, calcium, sodium, potassium, zinc, aluminum, silicon, germanium, indium, cadmium, antimony, tin; conducting polymers such as for example polyacetylene, polypyrrole, polyaniline, poly(thiophene), poly(3,4-ethylenedioxythiophene), poly(pyrrole), polycarbazole, polyindole, polycatechols, polyazepine and combinations thereof.

In a particular embodiment, the coating material capable of storing electrical energy by means of a reversible chemical reduction-oxidation process is a metal oxide selected from Bi₂O₃, MnO₂, RuO₂, Fe₂O₃, CO₃O₄, FeCo₂O₄, LiMn₂O₄, LiMnO₂, LiCoO₂, LiV₂O₅, LiNiₓCo_{y}O_{z}, NiCoMnO₄ and combinations thereof; a perovskite having chemical formula ABO₃, where 'A' and 'B' are two metal cations having different sizes, and O is an oxygen anion that binds to both; a mixed oxide selected from LaMnO₃, LaNiO₃, SrRuO₃ and combinations thereof; a transition metal phosphate selected from LiFePO₄, NiPO, Co₃(PO₄)₂ and combinations thereof; a metal nitride selected from VN, MoN, TiN and combinations thereof; a metal selected from silicon, lithium, germanium, tin; or a conducting polymer selected from polyacetylene, polypyrrole, polyaniline, poly(thiophene), poly(3,4-ethylenedioxythiophene) , poly(pyrrole), polycarbazole, polyindole, polyazepine and combinations thereof.

In a particular embodiment, each of the at least two inner sheets (3) and (3') comprising carbon nanotube fibers of the composite material of the present invention has a specific surface area between 10 and 2600 m²/g, more preferably between 10 and 1000 m²/g, still more preferably 250 m²/g.

The composite material of the present invention further comprises a polymer electrolyte (4) arranged between the at least two inner sheets (3) and (3') as defined above. The polymer electrolyte (4) can be used in the form of a membrane, a gel, a porous phase or filaments.

In a particular embodiment, the polymer electrolyte (4) is a combination of a polymer and at least one salt.

Non-limiting examples of polymers suitable for the polymer electrolyte (4) of the composite material of the present invention are non-ionic polymers, such as thermoplastic polymers, thermosetting polymers or elastomeric polymers, ionic polymers such as polycations or polyanions with their corresponding counterions.

Non-limiting examples of non-ionic thermoplastic polymers suitable for the polymer electrolyte of the composite material of the present invention include hydrocarbon polymers, such as for example polyvinyl fluoride, poly(vinylidene fluoride-hexafluoride), polyacrylonitrile, polyvinyl alcohol, polyethylene oxide and combinations thereof.

Non-limiting examples of polycations suitable for the polymer electrolyte of the composite material of the present invention include poly(diallyldimethylammonium), poly(imidazolium), poly(sulfonium), poly(phosphonium) poly(quaternary ammonium), poly(pyridinium) and combinations thereof.

Non-limiting examples of polyanions suitable for the polymer electrolyte of the composite material of the present invention include polysaccharides, polysulfates, polyphosphates, polycarboxylates and combinations thereof.

Non-limiting examples of salts suitable for the polymer electrolyte (4) of the composite material of the present invention are salts made up of cations such as H⁺, Li⁺, Na⁺, K⁺, Ag⁺, Mg²⁺, Zn²⁺, Al³⁺, Ca²⁺, imidazolium⁺, tetraalkylammonium⁺, phosphonium⁺, sulfonium⁺, etc., and anions such as carbonate (CO₃²⁻), oxalate (C₂O₄²⁻), fluoride (F⁻), chloride (Cl⁻), hydroxide (OH⁻), borates, methyl carbonate (OCO₂CH₃⁻), sulfonylimides such as (CF₃SO₂)₂N⁻, tetrafluoroborates (BF₄⁻), hexafluorophosphates (PF₆⁻), hexafluoroarsenate (AsF₆⁻), chlorates (ClO₄⁻), amidotriflates (CF₃SO₂)₂N, triflate (CF₃SO₃), etc.

In a particular embodiment, the polymer electrolyte (4) furthermore contains a solvent.

Non-limiting examples of solvents suitable for the polymer electrolyte (4) of the composite material of the present invention include water, carbonates (propylenecarbonate, ethylenecarbonate, etc), chloroform, alcohols, alkyls, ketones, ethers, esters, glymes, toluene, dichloromethane, dimethylformamide, dimethylsulfoxide, etc.

In a preferred embodiment, the salt is an inorganic salt containing metal cations such as Li⁺, Na⁺, K⁺, Ag⁺, Mg²⁺, Zn²⁺, Al³⁺, Ca²⁺. In a preferred embodiment, the salt is an ionic liquid.

The term "ionic liquid" refers to liquid salts at room temperature, which are made up of an organic or inorganic cation and an organic or inorganic anion. Non-limiting examples of ionic liquids suitable for the polymer electrolyte of the composite material of the present invention include bulky and asymmetric organic cations such as 1-alkyl-3-methylimidazolium, 1-alkylpyridinium, N-methyl-N-alkylpyrrolidinium, ammonium, phosphonium and sulfonium, and a wide range of anions such as inorganic anions, for example halides, tetrafluoroborates, tetrafluorophosphates, and organic anions, such as for example bistriflimide, cyanamide, triflate and tosylate.

In another preferred embodiment, the polymer electrolyte is a combination of a thermoplastic polymer and an ionic liquid. Preferably, the polymer electrolyte comprises between 1 and 99% by weight of ionic liquid, preferably between 10 and 90% by weight, more preferably between 50% and 70%, more preferably 60% by weight, where the percentages by weight are with respect to the total weight of the combination.

Still more preferably, the polymer electrolyte is a combination of poly(vinylidene fluoride-co-hexafluoropropylene) (PVdF-co-HFP) as a non-ionic thermoplastic polymer and 1-butyl-1-methylpyrrolidinium-bis-(trifluoromethylsulfonyl)imide(PYR₁₄TFSI) as an ionic liquid.

The ionic liquid PYR₁₄TFSI has a broad electrochemical stability window and high ionic conductivity. On the other hand, the PVDF-co-HFP copolymer has high mechanical properties and a semicrystalline character as a polymer matrix.

In a preferred embodiment, the polymer electrolyte has a thickness between 1 and 100 µm, more preferably between 1 and 50 µm, still more preferably between 1 and 20 µm, even more preferably about 10 µm.

In a particular embodiment, the thickness ratio of each of the at least two inner sheets (3) and (3') comprising the carbon nanotube fibers with respect to the sheet of polymer electrolyte (4) arranged between them is between 1/2 and 1/5, more preferably 1/5.

Without being bound to any theory in particular, the authors of the present invention believe that this thickness ratio improves the reproducibility of the preparation method for preparing the composite material of the present invention, in particular for cases in which large surface areas are desired, such as surface areas greater than 100 cm².

In a particular embodiment, the thickness ratio of the at least two inner sheets (3) and (3'), wherein each of said sheets comprises carbon nanotube fibers and the polymer electrolyte (4) arranged between the at least two inner sheets (3) and (3') with respect to the at least two outer sheets (2) and (2'), wherein each of said sheets comprises a polymer matrix and, optionally, reinforcing fibers, is 1/20. This thickness ratio gives rise to a lower total net weight while at the same time maintaining high mechanical and energy storage performance.

On the other hand, the composite material of the present invention can be prepared by means of a simple method that can be integrated into continuous processes for the preparation of sheets, such as roll-to-roll processing, for example. Accordingly, another aspect of the present invention relates to the preparation method for preparing the composite material (1) as defined above, said method comprises the steps of: a) assembling the polymer electrolyte (4) between the at least two inner sheets (3) and (3') comprising carbon nanotube fibers; b) interleaving the structure resulting from step a) between the at least two outer sheets (2) and (2') comprising a polymer matrix and, optionally, reinforcing fibers, to give rise to a sandwich-type structure; and c) applying pressure on the structure resulting from step b).

The method of the present invention therefore comprises a step a) of assembling the polymer electrolyte (4) between the at least two inner sheets (3) and (3') comprising carbon nanotube fibers.

The carbon nanotube fibers comprised in the at least two inner sheets can be prepared by means of the method described in patent documents EP2615193B1, EP2631330B1 and EP2631331A1.

In a particular embodiment, said method starts from a precursor solution of carbon nanotubes, wherein said solution contains a mixture of reagents consisting of ethanol or butanol acting as a precursor of carbon or source of carbon for obtaining the nanotube, a sulfur compound acting as a reaction promoter, for example thiophene, and an iron compound acting as a precursor for the formation of iron as a catalyst, for example ferrocene. As a step prior to use, the solution may be subjected to magnetic stirring and ultrasonication. The solution with these three components is injected into a pre-heater where the mixture is evaporated to then continue on to a reactor operating at a temperature between 1000 and 1400°C. In addition to the mixture, a hydrogen stream is injected into the reactor. The reaction of the components of the initial mixture takes place inside the reactor, such that a carbon nanotube aerogel is generated. A rod is introduced in the lower part of the reactor, causing the agglomeration of said carbon nanotube aerogel while at the same time said agglomerate adheres to the rod and it is gradually taken out of the reactor in the form of a fiber. As the formed fiber is taken out, it gradually rolls up with the aid of rotating rollers, thereby forming a condensed fiber. The method allows obtaining a fiber having a large length in a short period of time (see Figure 2a).

The resulting carbon nanotube fibers can be deposited *in-situ* or *ex-situ* on a laminar support, such as for example a sheet of fabric made using macroscopic fibers, such as Kevlar fibers, glass fibers, carbon fibers, cotton, cellulose or textile fibers. Likewise, they may be deposited *in-situ* or *ex-situ* on a polymer sheet, such as for example, a thermoplastic, elastomeric or thermosetting polymer sheet.

In a particular embodiment, the carbon nanotube fibers obtained according to the aforementioned methods can be coated with a material capable of storing electrical energy by means of a reversible chemical reduction-oxidation process by means of techniques such as electroplating, dipping, casting, doctor blade, CVD (chemical vapor deposition), ALD (atomic layer deposition), etc.

Once the sheets with the carbon nanotube fibers, optionally coated with the mentioned material, have been obtained, the polymer electrolyte is assembled between at least two of them. Assembling takes place by means of solution or dry impregnation methods. Impregnation into the pores of the sheets comprising the carbon nanotube fibers with the polymer electrolyte thereby takes place.

Non-limiting examples of solution impregnation methods suitable for the preparation method of the present invention are dip coating, spin coating, casting, spray coating, brush coating and infusion coating, which are more preferably followed by a drying step after impregnation.

A non-limiting example of the dry impregnation method suitable for the preparation method of the present invention is both cold and hot pressing.

The method of the present invention further comprises a step b) of interleaving the structure resulting from step a) between the at least two outer sheets (2) and (2') comprising a polymer matrix and, optionally, reinforcing fibers, to give rise to a sandwich-type structure.

The outer sheets (2) and (2') comprising a polymer matrix and, optionally, reinforcing fibers, can be prepared beforehand following methods known in the state of the art. In a particular embodiment, the integration of the reinforcing fibers in the polymer matrix can be carried out by means of an infusion process in which several layers of the reinforcing material are dry stacked according to a desired geometry and then impregnated with the polymer in a viscous state. In another particular embodiment, individual sheets of the reinforcing material are combined with the polymer to form the so-called "pre-peg," consisting of a layer of fiber and polymer in which the polymer is not altogether cured, where several layers can be stacked to later consolidate the material by means of hot pressing.

The method of the present invention further comprises a step c) of applying pressure on the structure resulting from step b).

A non-limiting example of step c) of the method of the present invention comprises applying a pressure of about 4 MPa normal to the plane of the laminar structure, using a conventional pneumatic press.

In a particular embodiment, steps b) and c) of the method of the present invention take place simultaneously.

In a particular embodiment, the material obtained after step c) is subjected to a curing process.

As discussed above, depending on the method for preparing the outer sheets (2) and (2'), the method of the present invention may require an additional step of curing the polymer matrix that allows consolidating the final composite material.

A non-limiting example of curing suitable for the method of the present invention includes oven-curing at a temperature comprised between 50 and 180°C for a time that is long enough to achieve the desired degree of curing in the end part, typically a couple of hours. For example, the material can be heated at 60°C for two hours.

Another aspect of the present invention relates to an electrochemical energy storage device comprising the composite material as defined above.

In a particular embodiment, the electrochemical energy storage device is a supercapacitor. More particularly, in the composite material of the present invention, the sheets (3) and (3') are not coated with a material capable of storing electrical energy by means of a reversible chemical reduction-oxidation process.

The term "supercapacitor" or "electrochemical double layer capacitor" or "pseudocapacitor" or "ultracapacitor," or simply "EDLC," refers to an electrochemical device capable of storing large amounts of electrical energy in the form of electrostatic charges and quickly delivering it when needed. They are formed by pairs of conductive electrodes separated by a dielectric medium. Its operation is very similar to the operation of a large-scale capacitor. However, the name "supercapacitor" indicates its greater capacity (measured in Farads), which is a thousands of times greater than the capacitance of high-capacity electrolytic capacitors, where they can furthermore be charged and discharged in very brief periods of time.

In the composite material of the present invention, the inner sheets (3) and (3') comprising carbon nanotube fibers are conducting sheets, and they accordingly act as electrodes, whereas the polymer electrolyte (4) promotes ion transfer and energy storage by means of non-Faradaic capacitive processes, therefore acting as a whole as a supercapacitor.

The specific surface area of the electrodes of a supercapacitor is the factor that most affects its capacity. In particular, the inner sheets comprising carbon nanotube fibers of the material of the present invention have a high specific surface area due to their high porosity, and therefore a high capacitance. This high porosity of the inner sheets comprising the carbon nanotube fibers of the material of the present invention also means that the charge and discharge rate of the supercapacitor is higher. This is due to the fact that the power and/or energy density of a capacitor is proportional to its specific capacitance (per unit of mass), which in turn increases with the degree of porosity.

In a preferred embodiment, the composite material of the present invention has a power density of 3 to 50 kW/Kg.

In turn, the outer sheets (2) and (2') provide high mechanical strength to the supercapacitor. Furthermore, the different sheets forming the composite material of the present invention present great adherence to one another, and therefore enormous resistance to the delamination phenomenon.

In another particular embodiment, the electrochemical energy storage device is a battery. In this particular embodiment, in the composite material of the present invention, at least one of the sheets (3) and (3') is coated with a material capable of storing electrical energy by means of a reversible chemical reduction-oxidation process as described above.

The term "battery" refers to an electrochemical device capable of converting the chemical energy stored in its electrodes into electrical energy. Unlike the supercapacitor, where the stored energy is purely electrostatic, chemical reactions or intercalation reactions in a battery take place in the electrodes. Since the energy storage mechanism is different, its electrochemical behavior is also different. For example, a battery has a higher energy density than a supercapacitor but less power and lower cyclability.

As mentioned above, in the composite material of the present invention, the inner sheets (3) and (3') comprising carbon nanotube fibers are conducting sheets, and they accordingly act as electrodes. Unlike the supercapacitor, energy storage takes place by means of Faradaic processes, acting as a whole as a battery.

In turn, the outer sheets (2) and (2') can act as a current collector.

All these properties enable using the composite material of the present invention furthermore as a structural component in the automotive and aeronautics fields, in portable electric and/or electronic devices, microelectronics, robotics, tools, energy generating systems (wind energy generating systems, photovoltaic energy generating systems, etc.), coupled to batteries, in cranes and construction equipment, in the textile/footwear industry, in home appliances.

### EXAMPLES

### EXAMPLE 1. Preparation of a laminar structure made up of a sheet containing carbon nanotube fibers/polymer electrolyte membrane/sheet containing carbon nanotube fibers.

The carbon nanotube fibers were prepared beforehand by means of the method described in any of the patent documents EP2615193B1, EP2631330B1 and EP2631331A1. Figure 2(a) shows a reel holding carbon nanotube fibers obtained by following said method. The resulting fibers consisted of a network of long, highly graphitic carbon nanotubes packed in clusters, as can be seen in Figure 2(c) and Figure 2(d). These fibers were deposited *in-situ* on a sheet of fabric made using carbon fibers. Said process is carried out, for example, by means of winding carbon nanotube fibers on a reel previously coated with the fabric made using carbon fibers. The carbon nanotube fibers can be wound directly at the output of the chemical reactor in which they are manufactured. Figure 2(b) shows a sheet thus obtained comprising the carbon nanotube fibers, which presented a high porosity with a predominance of mesopores and macropores, a specific surface area of 240 m²/g and a thickness of 7 µm.

The polymer electrolyte was then assembled between two sheets containing the carbon nanotube fibers obtained according to the preceding paragraph. In particular, a preformed membrane made using electrolyte PYR₁₄TFSI/PVDF-co-HFP was used as a polymer electrolyte. The membrane of the electrolyte was prepared beforehand with a doctor blade from a viscous solution of PVDF-co-HFP polymer and the ionic liquid PYR₁₄TFSI in a conventional solvent. The membranes that were produced were translucent and uniform, showing no evidence of phase segregation and having a thickness of 35 µm. Specifically, the electrolyte membranes were prepared using a concentration of ionic liquid between 50 and 70% by weight. Figure 3(b) shows that for a concentration of 60% by weight of ionic liquid, the membranes show optimal mechanical robustness and ionic conductivity, and said concentration was therefore used in the rest of the present example. The ionic conductivity of said membrane at room temperature was 4x10⁻⁴ S/cm, compared to 2.7x10⁻³ S/cm of the pure ionic liquid.

The resulting electrolyte membrane was then integrated between the carbon nanotube fiber sheets by applying pressure on the layers, which causes the impregnation in the pores of the carbon nanotube fiber sheets with the membrane. Figure 3 (a) shows electron micrographs of the resulting sandwich-type structure where the regions of the interfaces of the sheets show suitable infiltration of the polymer phase in the pores of the carbon nanotube fibers, without any dry regions being observed.

### EXAMPLE 2. Preparation of a laminar structure made up of a sheet containing carbon nanotube fibers coated with manganese oxide/polymer electrolyte membrane/sheet containing carbon nanotube fibers coated with manganese oxide.

The carbon nanotube fibers were prepared by means of the method described in Example 1. The carbon nanotube fibers were then coated with a metal oxide, specifically manganese oxide (MnO₂) by means of an electrochemical method. To that end, the fibers were dipped in an electrolytic bath made up of a mixture of ethanol and distilled water at a volumetric ratio of 0.4 to 1 (ethanol:water) and two dissolved salts, manganese nitrate (Mn(NO₃)₂) at a concentration of 0.05 M and sodium nitrate (NaNO₃) at a concentration of 0.1 M. The manganese oxide was then electroplated by applying on the fibers a constant current of 250 µA/cm² for several time intervals (5, 10, 20, 60 and 120 minutes). After the step of electroplating MnO₂ the coated fibers are washed with abundant acetone and oven-dried. The polymer electrolyte is then assembled between two sheets containing the coated carbon nanotube fibers obtained according to the preceding paragraph. In particular, a pre-formed electrolyte membrane, PYR₁₄TFSI/PVDF-co-HFP, as defined in Example 1 and Figure 3, was used as the polymer electrolyte. The electrolyte membrane was then integrated between the coated carbon nanotube fiber sheets by applying pressure on the layers, which causes the impregnation in the pores of the coated carbon nanotube fiber sheets with the membrane.

### EXAMPLE 3. Preparation of a supercapacitor with a sandwich-type structure made up of an epoxy resin sheet and carbon fibers/sheet containing carbon nanotube fibers/polymer electrolyte membrane/sheet containing carbon nanotube fibers/epoxy resin sheet and carbon fibers.

The structure resulting from Example 1 was interleaved between two epoxy resin sheets containing embedded carbon fibers. Said method was carried out by means of applying pressure on the obtained combination. A pressure of about 4 MPa was applied normal to the plane of the laminar structure, using a CARVER laboratory pneumatic press model 3853. The resulting structure was then oven-cured at 60°C for two hours.

Figure 4(a) shows a structural supercapacitor comprising the resulting laminar composite material, and Figure 4(b) shows the power and energy density of the resulting laminar composite material during the different steps of the manufacturing process.

## Claims

1. A sandwich-type laminar composite material (1) comprising:
- at least two outer sheets (2) and (2'), each of which comprises an outer surface (2a) and (2a'), respectively, and an inner surface (2b) and (2b'), respectively, wherein each of said sheets (2) and (2') comprises a polymer matrix and, optionally, reinforcing fibers;
- at least two inner sheets (3) and (3') arranged adjacently on the inner surfaces (2b) and (2b') of the sheets (2) and (2'), respectively, wherein each of the inner sheets (3) and (3') comprises carbon nanotube fibers; and
- a polymer electrolyte (4) arranged between the at least two inner sheets (3) and (3').

2. The composite material according to claim 1, wherein each of the at least two outer sheets (2) and (2') comprises a polymer matrix and reinforcing fibers.

3. The composite material according to any one of claims 1 to 2, wherein the polymer matrix is a thermosetting matrix.

4. The composite material according to any one of claims 1 to 3, wherein the reinforcing fibers are selected from carbon fibers, cellulose fibers, polymer fibers and glass fibers.

5. The composite material according to any one of claims 1 to 4, wherein each of the at least two outer sheets (2) and (2') has a thickness between 1 and 100 mm.

6. The composite material according to any one of claims 1 to 5, wherein each of the at least two inner sheets (3) and (3') has a thickness between 1 and 100 µm.

7. The composite material according to any one of claims 1 to 6, wherein each of the at least two inner sheets (3) and (3') has a specific surface area between 10 and 2,600 m²/g.

8. The composite material according to any one of claims 1 to 7, wherein the polymer electrolyte (4) comprises the combination of a polymer and at least one salt.

9. The composite material according to claim 8, wherein the polymer is a thermoplastic polymer selected from polyvinyl fluoride, poly(vinylidene fluoride-hexafluoride), polyacrylonitrile, polyvinyl alcohol, polyethylene oxide and combinations thereof.

10. The composite material according to any one of claims 8 to 9, wherein the salt is an inorganic salt.

11. The composite material according to any one of claims 8 to 9, wherein the salt is an ionic liquid.

12. The composite material according to any one of claims 8 to 11, wherein the polymer is poly(vinylidene fluoride-co-hexafluoropropylene) (PVdF-co-HFP) and the ionic liquid is 1-butyl-1-methylpyrrolidinium-bis-(trifluoromethylsulfonyl)imide (PYR₁₄TFSI).

13. The composite material according to any one of claims 11 to 12, wherein the ionic liquid is found in an amount of between 10% and 90% by weight with respect to the weight of the electrolyte.

14. Composite material according to any of claims 1 to 13, wherein the polymer electrolyte (4) furthermore contains a solvent.

15. The composite material according to any one of claims 1 to 14, wherein the thickness ratio of each of the at least two inner sheets (3) and (3') with respect to the polymer electrolyte (4) arranged between them ranges between 1/2 and 1/20.

16. The composite material according to any one of claims 1 to 15, wherein the thickness ratio of the at least two inner sheets (3) and (3') with respect to the at least two outer sheets (2) and (2') is between 1/2 and 1/50.

17. The composite material according to any one of claims 1 to 16, wherein at least one of the two inner sheets (3) and (3') has a coating made of a material capable of storing electrical energy by means of a reversible chemical reduction-oxidation process.

18. The composite material according to claim 17, wherein the material of the coating is a metal oxide selected from Bi₂O₃, MnO₂, Mn₃O₄, RuO₂, Fe₂O₃, Fe₃O₄, TiO₂, SnO, SnO₂, SiO, SiO₂, V₂O₅, VO₂, MoO_{3,} Nb₂O₅, ZnO, CdO, In₂O₃, CoO, CO₃O₄, FeCo₂O₄, LiMn₂O₄, LiMnO₂, LiCoO₂, Li₄Ti₅O₁₂, LiCoMn₂O₄, LiNiₓCo_{y}Mn_{z}O₂ where 0<x,y,z<1 and x+y+z=1, LiCo₁₋ₓMₓO₂ where 0<x<1, LiMn₂₋ₓMₓO₄ where 0<x<2, LiNiₓCo_{y}M_{z}O₂ where M=Mg, Al, etc. and where 0<x,y,z<1 and x+y+z=1, LiV₂O₅, LiV₃O₈, LiNiₓCo_{y}O₂ where 0<x,y<1 and x+y =1, Li (Ni_{0.5}Mn_{1.5})O₄, LiVPO₄F, NiCoMnO₄ and combinations thereof; a perovskite having chemical formula ABO₃, where A and B are two metal cations having different sizes, and O is an oxygen anion that binds to both; a mixed metal oxide selected from LaMnO₃, LaNiO₃, SrRuO₃ and combinations thereof; a transition metal phosphate selected from LiFePO₄, LiMnPO₄, NiPO, CO₃(PO₄)₂ and combinations thereof; a metal nitride selected from VN, MoN, TiN and combinations thereof; a metal oxysalt selected from a carbonate, an oxalate, an oxyhydroxide and an oxyfluoride; a metal selected from lithium, magnesium, calcium, sodium, potassium, zinc, aluminum, silicon, germanium, indium, cadmium, antimony and tin; or a conducting polymer selected from polyacetylene, polypyrrole, polyaniline, poly(thiophene), poly(3,4-ethylenedioxythiophene), poly(pyrrole), polycarbazole, polyindole, polycatechols, polyazepine and combinations thereof.

19. A preparation method for preparing the composite material according to any one of claims 1 to 18, wherein said method comprises:
a) assembling the polymer electrolyte (4) between the at least two inner sheets (3) and (3') comprising carbon nanotube fibers;
b) interleaving the structure resulting from step a) between the at least two outer sheets (2) and (2') comprising a polymer matrix and, optionally, reinforcing fibers, to give rise to a sandwich-type structure; and
c) applying pressure on the structure resulting from step b).

20. The method according to claim 19, wherein said method further comprises coating at least one of the sheets (3) and (3') with a material capable of storing electrical energy by means of a reversible chemical reduction-oxidation process.

21. An electrochemical energy storage device comprising the composite material according to any of claims 1 to 18.

22. A supercapacitor comprising a composite material according to any of claims 1 to 16.

23. A battery comprising a composite material according to any of claims 17 and 18.

24. Use of the composite material according to any of claims 1 to 18 as a structural component in the automotive field, aeronautics field, electrical field, electronic field, microelectronic field, robotics field, tools, energy generating systems, construction, textile/footwear industry or home appliances.
